# EUROPEAN PATENT APPLICATION

(11) **EP 4 604 599 A1**
(43) Date of publication of application: **20.08.2025**
(21) Application number: 24158175.0
(22) Date of filing: 16.02.2024
(51) Int. Cl.: H04W 24/02, H04W 52/02

(54) **COMMUNICATION APPARATUS AND BASE STATION INVOLVED IN SIGNAL ADAPTATION**

(71) Applicant: Panasonic Intellectual Property Corporation of America, Torrance, CA 90504 (US)
(72) Inventor: KURUVATTI, Nandish, 63225 Langen (DE); LI, Hongchao, 63225 Langen (DE); HORIUCHI, Ayako, Osaka, 571-8501 (JP); SUZUKI, Hidetoshi, Osaka, 571-8501 (JP)
(74) Representative: Grünecker Patent- und Rechtsanwälte PartG mbB

(57) **Abstract**

The present disclosure provides a communication apparatus, a base station, and methods for a communication apparatus and for a base station. The communication apparatus comprises circuitry, which determines, based on one or a combination of traffic status, a buffer status of the communication apparatus, a result of a measurement of channel quality, or position information related to a position of the communication apparatus, whether to transmit a request for activation, extension of activity, or deactivation of a cell, or a common signal for the cell or a transmission occasion in the cell; and a transmitter, which, in operation, transmits the request.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

In an embodiment, the techniques disclosed here feature a communication apparatus comprising circuitry, which determines, based on one or a combination of traffic status, a buffer status of the communication apparatus, a result of a measurement of channel quality, or position information related to a position of the communication apparatus, whether to transmit a request for activation, extension of activity, or deactivation of a cell, or a common signal for the cell or a transmission occasion in the cell; and a transmitter, which, in operation, transmits the request.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

- **Fig. 1**: shows an exemplary architecture for a 3GPP NR system;
- **Fig. 2**: illustrates SSB-less operation;
- **Fig. 3**: illustrates activation/deactivation of SCells and SSB availability switching;
- **Fig. 4**: is a block diagram of a communication apparatus and a base station;
- **Fig. 5**: is a block diagram of exemplary circuitry of a communication apparatus;
- **Fig. 6**: is a block diagram of exemplary circuitry of a base station;
- **Fig. 7**: is a flow chart showing method steps for a communication apparatus;
- **Fig. 8**: is a flow chart showing method steps for a base station;
- **Fig. 9**: illustrates PUCCH-based uplink wakeup signal (WUS) design;
- **Fig. 10**: illustrates PRACH-based uplink WUS design;
- **Figs 11, 12**: illustrate layer 2 based uplink WUS design;
- **Fig. 13**: is a flow chart illustrating an exemplary method for a communication apparatus using traffic based uplink WUS triggering;
- **Fig. 14**: is a flow chart illustrating an exemplary method for a communication apparatus channel quality based uplink WUS triggering;
- **Fig. 15**: is a flow chart illustrating an exemplary method for a communication apparatus using expiration/validity based uplink WUS triggering;
- **Fig. 16**: shows exemplary functional split options in 5G O-RAN.

### DETAILED DESCRIPTION

### 5G NR system architecture and protocol stacks

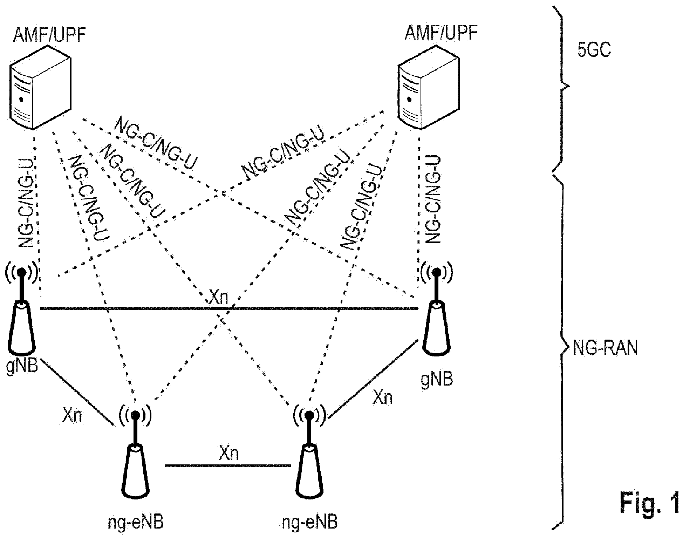

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### Network energy saving (NES)

In telecommunications networks, network energy saving (NES) has been identified as an important issue with regard to environmental sustainability, to reduce environmental impact (greenhouse gas emissions), and for operational cost savings. In 3GPP 5G Release 19, work items for NES have been formulated including the following four features (see e.g. RP-234065, "New WID: Enhancements of network energy savings for NR", section 4).

Firstly, procedures and signaling method(s) are to be specified to support on-demand SSB (synchronization signal block) SCell (Secondary cell) operation for UEs (user equipments) in connected mode configured with carrier aggregation (CA), for both intra-/inter-band CA. This includes selection of triggering method(s) such as UE uplink wake-up-signal using an existing signal/channel, cell on/off indication via backhaul, and SCell activation/deactivation signaling. It is noted that on-demand SSB transmission can be used by UE for at least SCell time/frequency synchronization, L1/L3 (layer 1 / layer3) measurements and SCell activation, and is supported for FR1 (frequency range 1, including sub-6 GHz frequency bands) and FR2 (including frequency bands from 24.25 GHz to 71.0 GHz) in non-shared spectrum.

Secondly, procedures and signaling method(s) are to be studied to support on-demand SIB1 (system information block) for UEs in idle/inactive mode. This includes triggering method by uplink wake-up-signal using an existing signal/channel, wake-up-signal configuration provisioning to UE, and information exchange between gNBs at least for the configuration of wake-up signal, if necessary.

Thirdly, adaptation of common signal/channel transmissions is to be specified, including adaptation of SSB in time domain, e.g. adapting periodicity, and adaptation of PRACH in time domain (a further issue for study and possible specification is adaptation of PRACH (physical random access channel) in spatial domain, e.g. non-uniform PRACH resources per SSB), and adaptation of paging occasions including confining the paging occasions in the time domain. Therein, it is desirable to have no negative impact to legacy UEs, unless significant benefits are shown.

Fourthly, the corresponding core requirements for the above features are to be specified.

In view of the above, the inventors have noted that ON/OFF switching of SSB and SIB-1 and time domain adaptation of SSB and other common channels (e.g. paging, PRACH) are a focus of Release 19 NES (network energy saving) enhancement.

### SCell SSB-less operation

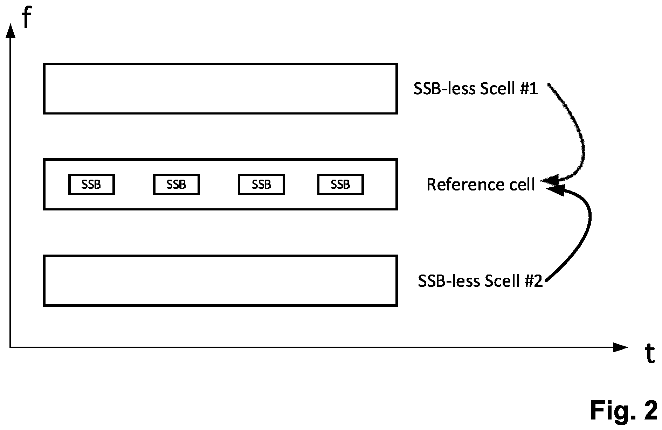

In 3GPP 5G Release 18, SSB-less operation has been studied as a feature supported for intra-band CA as well as inter-band CA for FR1 (see e.g. R4-2318190, "Topic summary for [109][234] Netw_Energy_NR"). In SSB-less operation, as illustrated in **Fig. 2****,** one or more cells, in particular a secondary cell (SCell) or SCells with SSB-less operation are configured with a "reference cell". The reference cell has the SSB (synchronization signal block) for the SSB-less SCell(s). This means that the SSB is transmitted in the reference cell rather than the SSB-less cell. A UE connected to the SSB-less cell can receive the SSB and perform synchronization based on the SSB in particular when the UE is located in an area of overlapping cell coverage areas of the SSB-less cell and the reference cell. In addition to having the SSB, the reference cell can also be the timing reference and the automatic gain control (AGC) training source of the SSB-less SCell. In addition, the reference cell may be a source cell for QCL (quasi-co-lacation). QCL measns that transmissions using different antenna ports have common channel characteristics such as Doppler Shift, Doppler Spread, Average Delay, Delay Spread, and/or Spatial Receiver Characteristics.

The reference cell can be either a PCell (primary cell) or a SCell (secondary cell). The PCell that serves the primary component carrier, and the SCells are cells that serves secondary component carriers, which supplement the primary component carrier in carrier aggregation to increase bandwidth.

### Network side triggering

In view of the above, the inventors have considered several issues related to network-side (e.g. gNB-side) triggering of SSB, SIBs (system information blocks), paging signaling, physical random access channel (PRACH) and other signaling, particularly common signals for a cell or cell group.

Firstly, the inventors have identified a need for defining signaling and procedure(s) to facilitate common channel adaptation of common channels such as the aforementioned SSB, SIB-1, paging and PRACH. This includes e.g. on-demand SSB activation and deactivation and/or SIB-1 ON/OFF switching. In view of this, such signaling and procedures for network side triggering (e.g. by the gNB) may be provided. Therein, SCell activation / deactivation may either be coupled or decoupled with SSB ON/OFF switching.

Further, an issue to be addressed is the impact on the SSB-less SCell when on-demand SSB and SSB-less operation are both configured. In view of this, the signaling for activation / deactivation of SSB-less operation may be provided.

In addition, an issue considered by the inventors is that when an SCell switches the SSB from ON to OFF, i.e., from the normal operation to SSB-less operation, the reference cell needs to be timely associated to the SCell. In view of this, signaling for reference cell activation and switching may be provided.

In particular, in exemplary network-side triggering techniques, the UE receives the indication from gNB regarding the on-demand SSB availability and/or other switchable settings for one or more cells. The indication may include one or more of SSB ON/OFF, SCell deactivation/deactivation, Cell DTX (discontinuous transmission) activation/deactivation, SCell dormancy indication, SCell SSB-less operation activation/deactivation, and/or an indication of a reference cell of SSB-less indication. When receiving the indication, the UE applies the on-demand SSB and assumes the SSBs to be available, if indicated available.

### UE side triggering

In addition to the above network-related triggering, other issues to be considered concern UE-side triggering.

In particular, an issue related to UE-side triggering is how the UE can trigger, report, request, and/or send assistance information to network to facilitate the NES operation in a timely and dynamic manner. In view of this, the present disclosure provides a definition for a UE-side triggering/request may be defined.

A further issue related to UE-side triggering is to define UE side triggering conditions in which the UE shall shall trigger/request/report to network to switch the SSB or SIB1 (or the common signals such as the above-mentioned ones) ON.

The present disclosure is particularly directed to the UE-side triggering techniques which can be implemented independently of the above-mentioned network side triggering, but may be combined with network side triggering techniques.

With the techniques of the present disclosure, UE may request the gNB to transmit the on-demand SSB or activate an SCell or SCells. Such a request, which may be included in a wake-up signal, may be based on one or more triggering conditions such as traffic status, buffer status, and/or (layer 1 or layer 3) measurement results.

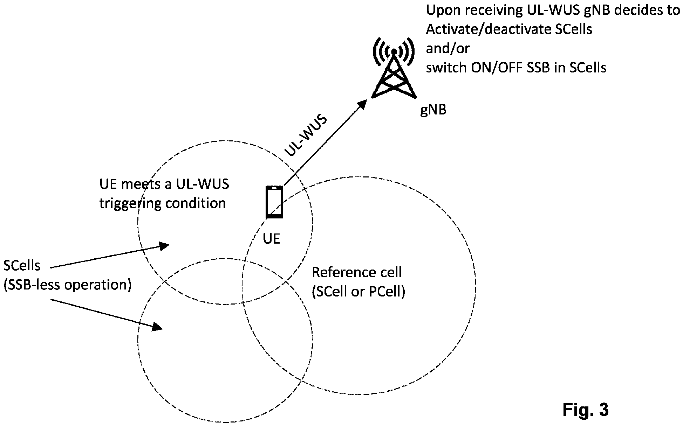

After receiving the request, which may be included in a wakeup signal (WUS) from the UE, the base station may then decide to activate or deactivate SCells and/or make the on-demand SSB available for the SCells, as shown in **Fig. 3****.**

Instead of the SSB, another on-demand common signal, such as system information (e.g. SIB1) may be requested and made available, or a transmission occasion for an uplink signal.

### Embodiments

In view of the above, the present disclosure provides techniques related to UE assisted common channel or signal adaptation or switching.

The present disclosure in particular provides base stations, which may include scheduling devices or scheduling apparatuses (such as scheduling nodes), corresponding methods for base stations, communication devices or communication apparatuses (e.g. adapted/configured to perform the function of a communication terminal in a communication system), corresponding methods and (computer) programs (e.g. stored on a memory) for communication devices (or apparatuses), communications systems comprising such scheduling devices and communication devices, as well as integrated circuits which, in operation, control a processes of scheduling devices/communication devices to perform the respective methods.

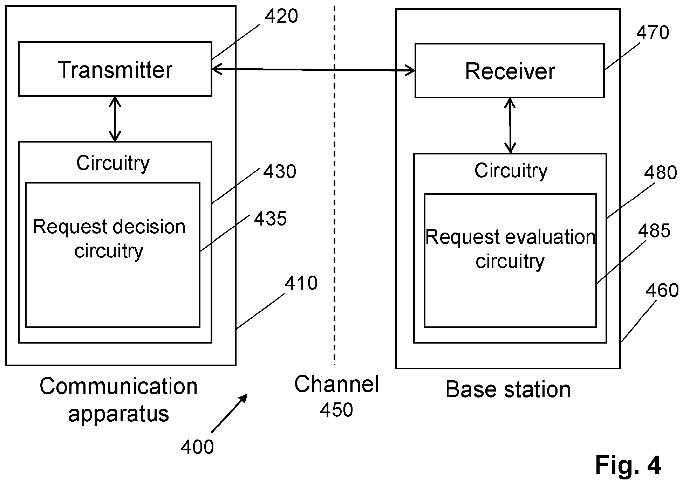

An example of such communication system is illustrated in **Fig. 4****.** The communication system 400 may be a wireless communication system in accordance with the technical specifications of 5G, in particular a NR (New Radio) communication system. However, the present disclosure is not limited to 3GPP NR terrestrial networks (TN) and may also be applied to NTNs (non-terrestrial networks) or other wireless or cellular systems.

**Fig. 4** illustrates a general, simplified and exemplary block diagram of a communication apparatus 410 (which may be exemplarily assumed to be a user equipment (UE) or communication terminal or communication apparatus) and a scheduling device or scheduling node (here exemplarily assumed to be located in a base station 460, e.g. in a LTE eNB (alternatively termed ng-eNB) or the gNB in 5G NR) in the communication system 400. However, in general, a scheduling device may also be a terminal in case of a sidelink connection between two terminals. Moreover, in particular with respect to the use cases of URLLC (ultra leliable low latency communication), eMBB (enhanced mobile broadband), and mMTC (massive machine type communication), the communication device 410 may also be a sensor device, a wearable device, or a connected vehicle, or a controller of an automated machine in an industrial factory.

As illustrated in **Fig. 4****,** the communication device 410 and the scheduling device 460 (eNB/gNB) may communicate with each other over a (wireless) physical channel 450 respectively using their transceivers 420 (communication terminal side) and 470 (base station side). Together, the scheduling device 460 and the communication apparatus 410 may form the communication system 400. The communication system 400 may further include other entities such as those shown in **Fig. 1** and, e.g. a plurality of UEs connected to the scheduling node or a relay node relaying signals to/from the base station from/to one or more UEs.

As illustrated in **Fig. 4****,** the communication device 410 may comprise a receiver 420 (e.g. a transceiver) and circuitry (or processing and/or control circuitry) 330, and the scheduling device 460 may comprise a transmitter 430 (e.g. a transceiver) and (processing and/or control) circuitry 380.

The term ***"transceiver"*** refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

In the present disclosure, the expressions "UE" and "gNB" before "circuitry", "transmitter", "receiver" and "transceiver" may be used for short to distinguish the transceivers and circuitries of a communication apparatus 410 and a base station 460, without implying any limitation to networks such as 3GPPP NR networks.

As shown in **Fig. 4****,** provided is a communication apparatus 410. The communication apparatus comprises circuitry 430 and a transmitter 420. The circuitry, in operation, determines, whether to transmit a request for one or both from:
- activation, extension of activity, or deactivation of a cell, or
- a common signal for the cell or a transmission occasion in the cell.

This determination is made based on one or a combination of traffic status, a buffer status of the communication apparatus, a result of a measurement of channel quality, or position information related to (e.g. indicating) a position of the communication apparatus. The transmitter 430, in operation, transmits the request.

Further provided is a base station 460, comprising a receiver 470 and circuitry 480. The receiver 470, in operation, receives a request for one or both from:
- activation, extension of activity, or deactivation of a cell, or
- a common signal for the cell or a transmission occasion in the cell.

The circuitry 480, in operation, determines, based on the received request, whether to activate, extend activation, or deactivate the cell or whether to transmit the common signal or activate the transmission occasion.

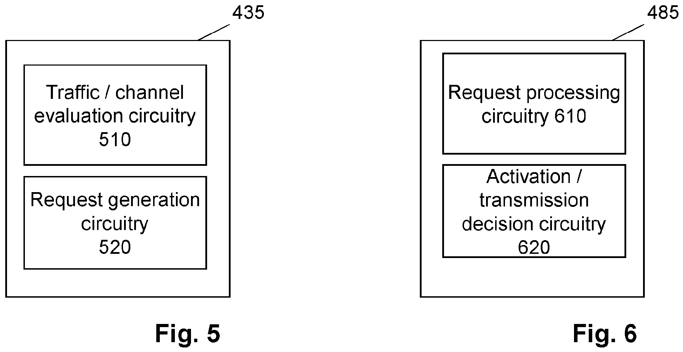

The UE circuitry 430 is exemplarily considered to comprise request decision circuitry 435 which, in operation, determines whether the request should be transmitted. As is further shown in **Fig. 5****,** exemplary request decision circuitry 435 may comprise traffic/channel evaluation circuitry 510 responsible for evaluating a traffic status, a buffer status of the communication apparatus, a result of a measurement of channel quality, or position information to determine whether a request should be transmitted, and request generation circuitry 520 responsible for determining the request for transmission.

Further, the gNB circuitry 480 is exemplarily considered to comprise request evaluation circuitry 485. As is further shown in **Fig. 6****,** exemplary request evaluation circuitry 485 may comprise request processing circuitry 610 responsible for reading the request and activation / transmission decision circuitry 620 responsible for deciding, based on the request, whether to activate, extend activation, or deactivate the cell or whether to transmit the common signal or activate the transmission occasion.

It is, however, noted that the UE circuitries 430, 435, and 510 and 520 as well as gNB circuitries 480, 485 and 610 to 6200 may implement more functionality than the above-mentioned, and the functionalities mentioned above are in general implemented by circuitries 430 and 480 without being limited to the respective circuitries 435, 510 and 520 or 485 and 610 and described above.

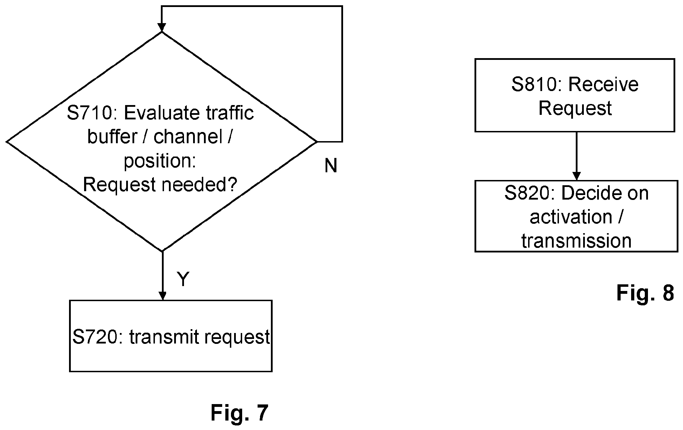

In correspondence with the above-described communication apparatus 410, provided is a communication method for a communication apparatus. As shown in Fig. 7, the communication method comprises a step S710 of determining whether to transmit a request for one or both from
- activation, extension of activity, or deactivation of a cell, and/or
- a common signal for the cell or a transmission occasion in the cell.

This determination is made based on one or a combination of traffic status, a buffer status of the communication apparatus, a result of a measurement of channel quality, or position information related to (e.g. indicating) a position of the communication apparatus. The method further comprises a step S720 of transmitting the request, if it is a result of the determination that the request is to be transmitted, or not transmitting the request, if it is not determined that the request is to be transmitted.

Further, in correspondence with the base station 460, provided is a communication method for a base station. The communication method comprises a step S810 of receiving a request for one or both from:
- activation, extension of activity, or deactivation of a cell, or
- a common signal for the cell or a transmission occasion in the cell.

The method further comprises a step S820 of determining, based on the received request, whether to activate, extend activation, or deactivate the cell or whether to transmit the common signal or activate the transmission occasion.

The above-mentioned "common signal" may be a synchronization signal (e.g. SSB), a reference signal (e.g. channel-state information reference signal (CSI-RS), a control signal, or system information (e.g. SIB1).

Furthermore, the common-signal may be a switchable "on-demand" signal which is switchable between states ON or OFF in accordance with traffic, cell usage, cell occupation, channel quality and other requirements such as QoS related requirements.

Moreover, the "transmission occasion" (or TO) may be a transmission occasion for an uplink signal such as a control signal (e.g. physical random access channel (PRACH) or physical uplink control channel (PUCCH)) or reference signal.

As a result of the determination, the base station method may further include a step of transmitting an indication indicating activation, extension of activation, or deactivation of the cell and/or indicating whether to transmit the common signal or activate the transmission occasion. The gNB receiver 470 may be a transceiver which performs the transmission. Such an indication may be carried by e.g. a PDCCH, MAC CE, by higher-layer signaling such as RRC, or by the common signal itself. Correspondingly, the UE method may comprise a step of receiving the indication. Moreover, the UE method and the gNB method each may comprise steps of performing communication, e.g. the gNB transmitting and the UE receiving the common signal, or the UE making a transmission on the transmission occasion to the base station.

In the request, the cell to be activated or deactivated may be a secondary cell (SCell). Further, if the cell is already active, the UE may generate the request as a request for extension of activation.

Moreover, the request may be a request for a common signal such as SSB ON/OFF switching or for extension of an SSB ON switching state in which the SSB is transmitted on configured monitoring occasions, or a request for ON/OFF switching of configured transmission occasions of an uplink signal or channel such as PRACH.

The request may be sent by the UE in a wake-up signal (WUS). For instance, for one or more cells, the UE may send an UL-WUS to request SCell activation/deactivation, and/or SSB ON/OFF switching.

The request sent by the UE may be an indication of a buffer status, such as a buffer status report (BSR).

Based on the UE's buffer status, the gNB may determine whether activation of a secondary cell is necessary or whether an active SCell can be deactivated for energy saving purposes or needs to remain active. Likewise, the gNB may determine whether a common signal such as SSB is needed for the UE to synchronize and/or perform channel measurements for necessary transmissions.

For instance, a BSR may be sent by the UE in PUCCH (layer 1) or in a MAC CE (on layer 2), however, other channels and signals disclosed in the present application for transmitting the request may also be used for indicating a buffer status.

In addition or alternatively, the request may include an explicit indication of one or more cells or cell groups to be activated or the request may include explicit indication of a SSB request for one or more cells. Such explicit indication may include a cell index or cell group index or indices of the cell(s) for which the request is made.

However, as an alternative to the explicit indication, an implicit indication is also possible. For example, a request may be transmitted on a configured resource (e.g. frequency, time, code, etc. resource, or beam) having a configured association with the cell or cells for which the request is made.

For instance, the request is an implicit indication of an SSB request or a cell activation request for one or more cells, where the triggering state or cell (group) indices is associated with the PUCCH resource index.

The gNB is then able to determine the cell for which the request is made from the resource where the request is received. An association between resources for transmission and cells may be shared by the UE and the gNB via specification, RRC signaling, or system information.

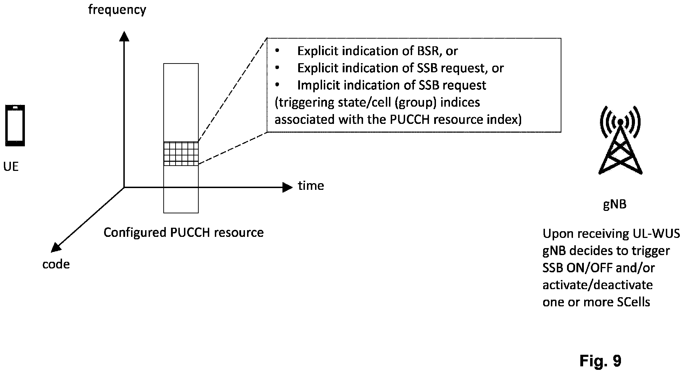

As shown in Fig. 9, the request, e.g. UL-WUS, may be carried by PUCCH. For instance, a PUCCH resource for the request may be configured in time, frequency and/or code domain and/or possibly other domains such as beam.

Upon receiving the request, the gNB determines or decides whether to trigger SSB ON/OFF and/or activate/deactivate one or more SCells.

As described above, L1-triggering such as a PUCCH request, may provide a short latency. Furthermore, modifications on existing channels and procedures may be facilitated. In addition, the system overhead may be mitigated by using PUCCH for the request. At the same time, useful information can be provided to the network for the decisions regarding NES operation.

As a further alternative to the above-mentioned PUCCH-based request, a design based on a physical random access channel (PRACH) is also possible. For instance, an UL-WUS signal may be sent via PRACH to request SCell activation/deactivation and/or SSB ON/OFF switching.

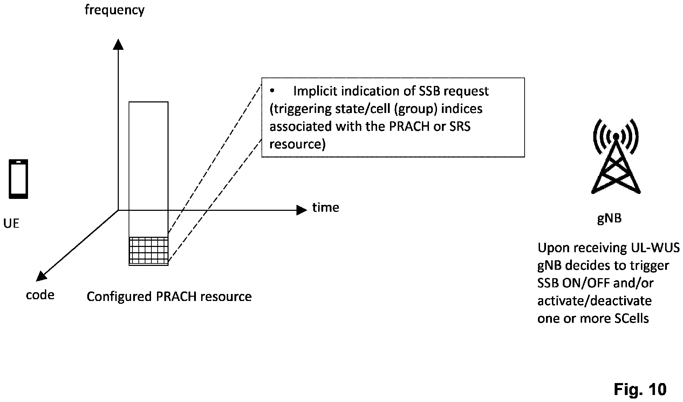

As shown in Fig. 10, the UL-WUS may be carried by a configured PRACH resource (time, frequency and/or code domain or other resource). The request may be made as an implicit indication for one or more cells, where a triggering state (ON/OFF) and/or cell group indices of cells to be activated or cells with SSB to be requested is associated with a configured PRACH resource. As mentioned above, an association between resources and cells or triggering states may be configured or specified. For the triggering state, different resources (e.g. different transmission occasions configured differing in one or more of resource allocations out of time frequency or codes etc.) may be associated, respectively, with an "ON" triggering state and an "OFF" triggering state or with an "activation" state and a "deactivation" state. when a gNB receives ul-wus on configured resource, it can implicitly know which switching state or triggering state is requested by the UE.

It is noted that a contention-based PRACH resource may be used for unified design of connected mode and idle/inactive mode operations (e.g., on-demand SSB and on-demand SIB1 respectively).

"Contention-based" random access (such as PRACH) means that a random access preamble is shared by the UE with other UEs. The UE chooses RA preamble randomly from a pool of available preambles, and there is a possibility of contention when more than one UE is using the same RA preamble at the same time. The gNB need not assign a dedicated random access preamble to each UE.

With PRACH-based design, an L1 triggering mechanism is provided that may enjoy short latency and facilitate modifications on existing channels and procedures. Furthermore, a reliable request transmission may be facilitated using PRACH. At the same time, useful information can be provided to the network for the decisions regarding NES operation.

As an further possibility alternative to PUCCH shown in **Fig. 9** and PRACH shown in **Fig. 10****,** the request, e.g. UL-WUS, may also be carried by an uplink reference signal such as sounding reference signal (SRS) For instance, an SRS resource may be configured in time, frequency and/or code domain and/or possibly other domains such as beam. The indications described above, such as explicit indication and implicit indication of the SSB request and/or BSR, can also be carried by a SRS.

For instance, an UL-WUS signal may be sent via SRS to request SCell activation/deactivation and/or SSB ON/OFF switching. The SRS is a reference signal transmitted by the UE according to instructions provided by the base station, and the base station measures the uplink channel propagation from the received SRS.

As also shown in **Fig. 10****,** the UL-WUS may be carried by a configured SRS resource (time, frequency and/or code domain or other resource). The request may be made as an implicit indication for one or more cells, where a triggering state (ON/OFF) or cell group indices of cells to be activated or cells with SSB to be requested is associated with a configured SRS resource. As mentioned above, an association between resources and cells or triggering states may be configured or specified.

In the above-described examples, L1-based UL WUS design is considered. However, the present disclosure further provides embodiments with L2-based UL WUS design.

For instance, for one or more cells, the UE may send an UL WUS that is carried by a Medium Access Control (MAC) Control Element (CE), to the gNB to request SCell activation and/or SSB ON/OFF switching.

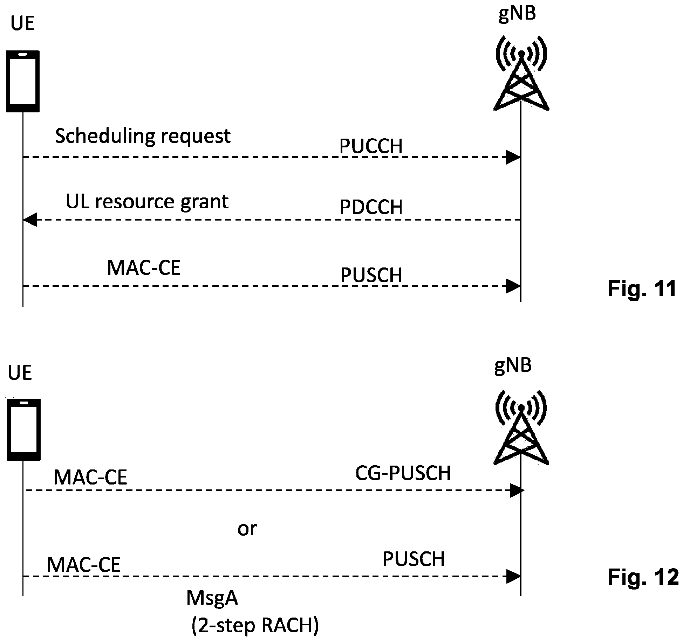

The MAC CE may be transmitted via dynamically granted PUSCH (physical uplink shared channel), as shown in **Fig. 11****.** In such a case, the UE first sends a scheduling request, receives an UL resource grant, and then can transmit the MAC CE carrying the UL WUS on the resources granted for PUSCH by the resource grant.

Besides the DG PUSCH, the MAC CE may also be transmitted by configured grant (CG) PUSCH, as shown in **Fig 12****.** Configured-grant PUSCH can be configured by implementation to facilitate.

As also shown in **Fig. 12****,** the PUSCH in the MsgA for two-step RACH can be used to send the MAC CE (it is noted that the two arrows in Fig. 12 represent alternatives rather than a sequence of signals). In 2-step RACH, MsgA (Message A) is a message transmitted from UE to gNB includes both a preamble as well as a PUSCH.

Both CG PUSCH and MsgA may facilitate sending such a MAC CE to gNB, and a scheduling request and dynamic resource grant may not be required.

By sending the WUS to the gNB over layer 2, provision of reliability may be facilitated due to higher layer ARQ (automatic repeat request) protection.

In addition, Configuring CG-PUSCH or using MsgA of two-step RACH for transmitting MAC CE carrying WUS can accommodate for short latency as well.

As illustrated by the examples above, the UE request for activation, extension of activity, or deactivation of a cell, and/or for a common signal for the cell or a transmission occasion in the cell, may be transmitted by the UE in a physical uplink control channel (PUCCH), a medium access control (MAC) control element (CE), or physical random access channel (PRACH), or reference signal (e.g. SRS) including the request.

Further, according to the present disclosure, the UE may also transmit a higher-layer message including the request for common signal or transmission occasion ON/OFF switching and/or for cell activation/deactivation.

As an example of higher-layer signaling, UL WUS design of a WUS including the request may be layer 3 (L3) based. For example, the UE may indicate to the gNB to switch IN SSB or activate an SCell via L3, e.g. via RRC signaling, e.g. during RRC setup. The higher layer message may then be a setup message of RRC, e.g. Msg3 (RRC setup request message) or message 5 (RRC setup complete message).

The RRC connection setup is a procedure for a transition of the UE from RRC Idle. mode to RRC Connected mode. The signaling for RRC connection setup is based on a 3-way handshake, and includes an *RRCSetupRequest* message from the UE, to which the gNB responds by an *RRCSetup* message. After receiving the *RRCSetup message,* the UE can make the transitionto RRC connected mode, and then sends a *RRCSetupComplete* message. *RRCSetupRequest* and *RRCSetupComplete* are sent by the UE as Msg3, and respectively, Msg5, during contention based Random Access procedure.

For instance, in the higher-layer message, UE capability reporting or a request field may be added for SSB ON triggering or SCell activation.

Furthermore, if an explicit cell index is indicated, a per cell bitmap or bit field or cell group-based indication may be used.

An explicit indication of a cell index or cell group index may be optionally included in the request. If no index is included, the request may be understood to indicate that a default cell or cell groups are triggered to switch ON the e.g. SIB1 for example. The default cell or cell group may be the same cell (group) or or a cell (group) associated with the cell where UE sends Msg3/5 to.

The cell index or cell group index may be from a configured or informed list sent from the gNB in RRC setup procedure or SIB. More specifically, UE may acquire the cell index by cell identification through detecting and measuring the SSBs of the cells. SIB1 triggering may be based on the measurement of the SSB, which means good quality cells can be considered to be requested to switch ON SIB1 and/or other common channels. On the other hand, SSB triggering may be based on the UE determining that some cell's SSB is not yet detected and UE can request to switch this/these cells ON.

The above-mentioned bitmap or bit field may be designed for single cell or group of cells. For instance, 1 in a bitmap may indicate switch ON SSB in specific cell if it is designed to indicate single cells. When designed to indicate plurality of cells, 1 may indicate switch ON SSB in the specific cell group to which the bitmap relates.

Sending the WUS from the UE to the gNB via L3 may be a robust and reliable method for requesting SSB ON/OFF or Scell activation.

In the above disclosure, examples have been described of how a request for a common signal, or a request for activation of a cell or SCell, is transmitted from a UE to the base station, and what types of signal or channel may be used for the request.

In the following, exemplary triggering conditions for triggering such a request from the UE are described. It is noted that any of the triggering conditions to be described may be combined with any of the signaling techniques disclosed.

A possible triggering mechanism is traffic-based UL-WUS triggering. For instance, the triggering condition for the UE to send the UL-WUS to the gNB to switch SSB ON and/or activate one or more SCells can be due to data traffic arrival and traffic situations (either DL or UL), with context such as: buffer at the UE being higher than a threshold, and/or Traffic priority (e.g., certain high priority traffic as a trigger), and/or throughput lower than threshold although RSRP is greater than threshold.

"High priority" traffic may be traffic associated with low-latency requirements such as eMBB, mMTC or URLLC or with certain QoS requirements.

Moreover, regarding the throughput, a request may be triggered in particular when the throughput lower than threshold while RSRP (reference signal received power) is greater than threshold.

In other words, the communication apparatus may determine to transmit the request upon determining that one of the following conditions is met:
- an amount of data buffered at the communication apparatus 410 for transmission is greater than a buffer threshold;
- high priority data is available at the communication apparatus 410 for transmission; or
- a data throughput at the communication apparatus 410 is lower than a throughput threshold.

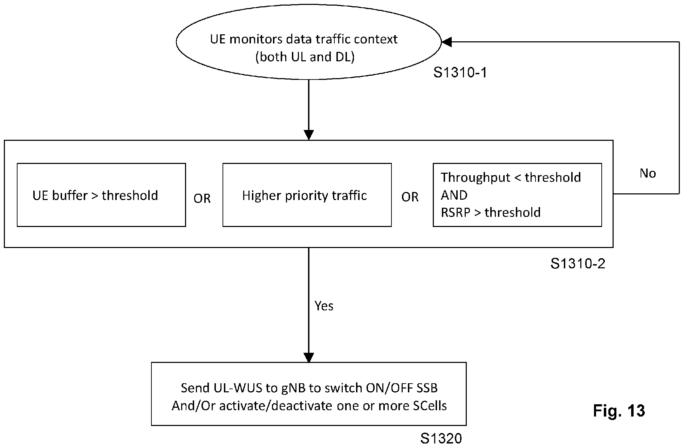

Exemplary steps of a UE method in accordance with traffic-based request triggering are shown in **Fig. 13****.** Steps S1310-1 and S1310-2 form an implementation of step S710. In step S1310-1 the UE monitors the data traffic context in both UL and DL. Monitoring UL traffic may include monitoring a buffer status, and monitoring DL traffic context may include checking or determining whether a DL transmission has been scheduled or configured and is to be expected for reception. Moreover, in step S1310-2, as a result of the monitoring, the UE checks or determines whether one or more of the above-mentioned triggering conditions is met (here "OR" implies "and/or"). If yes, the UE sends UL-WUS to gNB to switch SSB ON/OFF and/or activate/deactivate one or more SCells (step S1320 as an implementation of step S720).

Using a request from UE to gNB to activate the SSB or Cell(s) based on traffic conditions may facilitate shortening the latency, e.g. when compared to using a scheduling request (SR) and subsequently reporting BSR (buffer status report).

A further possible triggering mechanism of a request (e.g. UL WUS) includes channel quality based UL-WUS signaling.

The UE may determine to transmit the request for cell activation and/or common signal transmission upon determining that at least one of the following conditions is met:
- all or a number of cells, secondary cells, or secondary cells with the common signal status being ON have a measured channel quality lower than a first quality threshold; or
- a measured channel quality of a primary cell or a synchronization reference cell is lower than the first quality threshold or a second quality threshold different from the first quality threshold.

Here, "synchronization reference cell" refers to a cell where an SSB is configured for one or more cells with SSB less operation illustrated in **Fig. 2** (or correspondingly another common signal such as SIB1 is transmitted in the reference cell rather than the cell(s) for which the signaling of the common signal is made).

For instance, the UL WUS triggering condition at the UE may be due to poor channel quality of SSB or reference signal of other cells and/or coverage not sufficient, e.g.measurement quality is lower than a threshold for a UE not at cell edge and/or is in stationary status. The "other cells" refer to cells different from the cell for which the request is made may include the PCell, other SCells or not yet configured cells having sufficient coverage for the UE to receive the SSB..

The triggering conditions as described for channel quality based triggering of the request may also be formulated as including one or more conditions out of:
- The number of Cells/SCells with measurement quality lower than a first threshold is larger than a second threshold; or
- the number of Cells/SCells with measurement quality higher than a first threshold is smaller than a second threshold; or
- all the SCells'(with SSB transmission) measurement quality is lower than a threshold; or
- all the Cells' measurement quality is lower than a threshold; or
- SSB measurement quality of a PCell or "reference cell" of an SSB-less SCell is lower than a threshold.

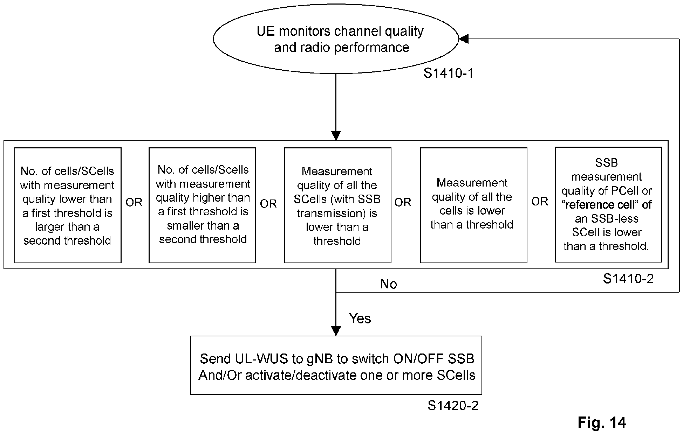

Exemplary method steps for UL WUS triggering on the UE side are shown in Fig. 14. Steps S1410-1 and S1410-2 form an implementation of step S710. In step S1410-1, the UE monitors channel quality and/or radio performance. In step S1410-2, as a result of the monitoring, the UE checks or determines whether one or more of the above-mentioned triggering conditions is met (here "OR" implies "and/or"). If yes, the UE sends UL-WUS to gNB to switch SSB ON/OFF and/or activate/deactivate one or more SCells (step S1420 as an implementation of step S720).

Using a request to activate SSB, common signal or secondary cells based on channel quality, synchronization performance or radio performance may facilitate providing a good measurement quality and synchronization performance.

As a further possibility, possibly in combination with the previously mentioned triggering conditions, the request or UL-WUS may be triggered based on expiration or validity.

As mentioned above, when the cell is active or the status of the synchronization signal for the cell is ON, the request may be a request for the extension of activity of the cell or of the ON status common signal such as SSB.

For instance, when an SCell operates on-demand SSB and there is a validity period for on-demand SSB, UE may request the gNB to extend the validity period of the already ON SSB, or of SCell activity. The request to extend the SSB may be sent using any of the above-mentioned signaling options of L1, L2 and higher layer signaling, and may, but not need to be combined with any of the previously described triggering conditions.

Optionally, the request may further include an indication of a requested duration of the extended activity or ON status.

For instance, the UE may request how long extension or SSB ON duration or cell activity is needed. Candidate values for such extension periods can be pre-configured by RRC or SIB.

However, as the indication of the requested duration is optional, the request may also be sent without such an indication.

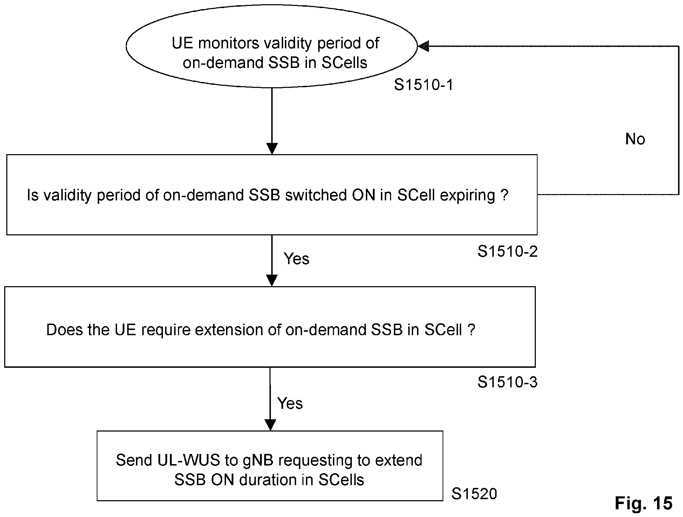

Exemplary method steps for a UE in extension or validity based triggering are shown in **Fig. 15****.** Here, step S710 is implemented by steps S1510-1 to S1510-3. In particular, in step S1510-1, the UE monitors the validity period of on-demand SSB in SCells.

Therein, if the UE determines that the validity period of on-demand SSB switched ON in SCell is expiring (yes in step S1510-2), the UE further determines whether the UE requires extension of an on-demand SSB in SCell (StepS1510-3). If "yes", the UE sends an UL WUS to gNB requesting to extend SSB ON duration in SCells (step S1520 as an implementation of S720). If the result of determination in step S1510 is "no", the method may end.

The same steps may be performed for triggering a request for extending a period for another on-demand common signal, for an UL transmission occasion, or for SCell extension of activation.

By extension or validity based request triggering in accordance with the present embodiments, provision of enhanced and uninterrupted synchronization performance and measurement quality at the UE may be facilitated.

Furthermore, as already mentioned, triggering of a UL WUS or request for a common signal or for cell activation may be location based or based on position information related to a position (e.g. based on a position or indicating a position) of the communication apparatus.

The communication apparatus 410 may determine whether to transmit the request based on a distance between the communication apparatus and a transmission and reception point (TRP) for the cell, wherein the distance may be based on position information.

The triggering condition at a UE may be based on the position information of the UE and the position information of a TRP (transmission and reception point) or TRPs of the base station.

For instance, the gNB may indicate the location of TRPs of Cells, e.g. SCells, to UE. Based on its location, UE may trigger/request which Cell(s) should be ON. Such a triggering condition may be derived based on distances between the UE and one or more TRPs.

An exemplary triggering condition may be that a distance between UE and TRP of a "reference" cell or a PCell or SCell that the UE is currently using becomes greater than the distance between UE and TRP of SCell (in which case the UE gets closer to the TRP of SCell than TRP ofe.g. the reference cell or PCell). In such case, the UE may request activation of the SCell with the lower distance, or transmission of the SSB in the cell with the lower distance.

It is noted that any source can be considered for acquiring the position information of the UE and/or of TRP(s), including Global Navigation Satellite System (GNSS), WiFi, and/or a positioning reference signal PRS (positioning reference signal).

Alternatively or in addition, radio-maps may be used as position information or channel quality information which indicate coverage areas of different Cells. Such radio maps may include RSRP/RSRQ maps from drive tests or MDT (minimized drive test) results. An exemplary triggering condition may be that an RSRP of "reference" cell becomes smaller than RSRP of SCell, which may trigger SSB transmission for the SCell in the reference cell.

Irrespectively of the source, distance information can act as a complementary information to reflect channel quality. Accordingly, a request to activate the SSB and/or an SCell based on position information may facilitate enhancing measurement quality and synchronization performance.

In the present disclosure, some examples are provided where the request to be triggered and sent by the UE is a request for SSB ON/OFF switching or extension. However, it is noted that all of these examples are generally applicable to a request for one or both of:
- activation, extension of activity, or deactivation of a cell, and/or
- a common signal for the cell or a transmission occasion in the cell.

The "common signal" of the present disclosure may be a synchronization signal, a reference signal, a control signal, or system information.

Thus, the above mentioned examples, even when describing the indication a request for SSB, may also be applied to requests for other common signals such as a synchronization signal, a reference signal or system information. Examples for such common signal include SIB1 and other common channels or signals such as paging monitoring occasions, and a requested transmission occasion for the uplink may include a PRACH (transmission) occasions.

Furthermore, the above-described techniques and signaling for SSB ON/OFF availability switching are applicable to CSI-RS ON/OFF switching.

Moreover, the request may be made for one or a plurality cells, e.g. SCells, which are to be activated and/or for which the common signal is requested. For instance, the request, in accordance with any of the above-described signaling techniques (L1, L2, higher layer), may include indices of each cell for which the request is made, or the request may be transmitted on configured resources (e.g. time, frequency, code), for which an association of the resource with the cell is configured (e.g. by RRC of system information).

Furthermore, in the present disclosure, "WUS" (wakeup signal) is merely used as an exemplary term for any a signal that carries a request for cell (de-)activation and/or common signal switching. In particular, "wakeup signal" is not to be limited to any signal termed "wakeup signal" in any communication standard or standardization discussion.

Moreover, as described above, a request for the extension of activity of the cell or of the ON status may include an indication of a requested duration of the extended activity or ON status. However, it is noted that such indication is not limited to extension of cell activation or ON switching status of a signal, but may also be indicated along with the request for activation/deactivation or ON/OFF switching when the signal is currently switched off and requested to be activated or when an SCell for which the request is made is currently in a deactivated state.

### RRC connection setup and reconfiguration procedures

Interactions between a UE, gNB, and AMF (an 5GC entity) in the context of a transition of the UE from RRC_IDLE to RRC_CONNECTED for the NAS part are described(see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

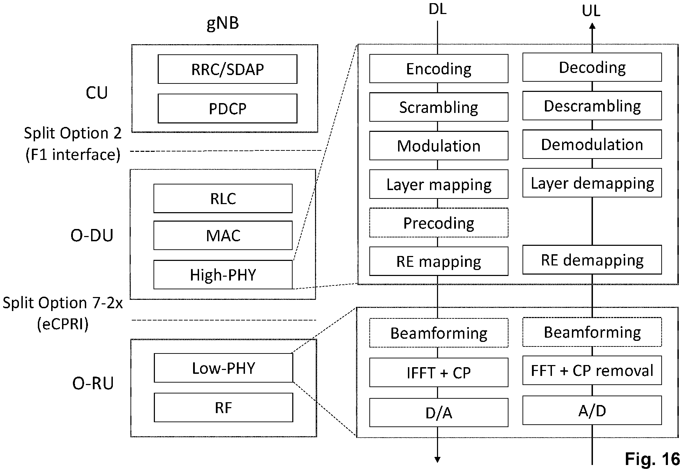

**FIG. 16** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD: Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Aspects

Aspect 1. A communication apparatus, comprising:
circuitry, which determines, based on one or a combination of:
- traffic status,
- a buffer status of the communication apparatus,
- a result of a measurement of channel quality, or
- position information indicating a position of the communication apparatus,

whether to transmit a request for:
   - activation, extension of activity, or deactivation of a cell, or
   - a common signal for the cell or a transmission occasion in the cell; and
a transmitter, which, in operation, transmits the request.

Aspect 2. The communication apparatus according to aspect 1, wherein the transmitter, in operation, transmits an indication of the buffer status as the request.

Aspect 3. The communication apparatus according to a 1 or 2, wherein the request includes an indication of the cell.

Aspect 4. The communication apparatus according to any one of aspects 1 to 3, wherein the transmitter, in operation, transmits the request on a resource having a configured association with the cell.

Aspect 5. The communication apparatus according to any one of aspects 1 to 4, wherein the transmitter, in operation, transmits the request in a physical uplink control channel (PUCCH), a medium access control (MAC) control element (CE), physical random access channel (PRACH), or a reference signal including the request.

Aspect 6. The communication apparatus according to any one of aspects 1 to 4, wherein the transmitter, in operation, transmits a higher-layer message including the request.

Aspect 7. The communication apparatus according to aspect 6, wherein the higher-layer message is a setup message of radio resource control, RRC.

Aspect 8. The communication apparatus according to any one of aspects 1 to 7, wherein the common signal is a synchronization signal, a reference signal, a control signal, or system information.

Aspect 9. The communication apparatus according to any one of aspects 1 to 8, wherein the circuitry, in operation, determines to transmit the request upon determining that at least one of the following conditions is met:
- an amount of data buffered at the communication apparatus for transmission is greater than a buffer threshold;
- high priority data is available at the communication apparatus for transmission; or
- a data throughput at the communication apparatus is lower than a throughput threshold.

Aspect 10. The communication apparatus according to any one of aspects 1 to 9, wherein the circuitry, in operation, determines to transmit the request upon determining that at least one of the following conditions is met:
- all or a number of cells, secondary cells, or secondary cells with the common signal status being ON have a measured channel quality lower than a first quality threshold; or
- a measured channel quality of a primary cell or a synchronization reference cell is lower than the first quality threshold or a second quality threshold different from the first quality threshold.

Aspect 11. The communication apparatus according to any one of aspects 1 to 10, wherein the circuitry, in operation, determines whether to transmit the request based on a distance between the communication apparatus and a transmission and reception point for the cell, the distance being based on the position information.

Aspect 12. The communication apparatus according to any one of aspects 1 to 10, wherein the circuitry, in operation, determines whether to transmit the request based on a radio map indicating coverage area information of one or more cells including said cell.

Aspect 13. The communication apparatus according to any one of aspects 1 to 11, wherein, when the cell is active or the status of the synchronization signal for the cell is ON, the request is a request for the extension of activity of the cell or of the ON status.

Aspect 14. The communication apparatus according to aspect 13, wherein the request includes an indication of a requested duration of the extended activity or ON status.

Aspect 15. A base station, comprising: a receiver which, in operation, receives a request for:
- activation, extension of activity, or deactivation of a cell, or
- a common signal for the cell or a transmission occasion in the cell; and
circuitry, which, in operation, determines, based on the received request, whether to activate, extend activation, or deactivate the cell or whether to transmit the common signal or activate the transmission occasion.

Aspect 16. The base station apparatus according to aspect 15, wherein the receiver, in operation, receives an indication of the buffer status as the request.

Aspect 17. The base station according to a 15 or 16, wherein the request includes an indication of the cell.

Aspect 18. The base station according to any one of aspects 15 to 17, wherein the receiver, in operation, receives the request on a resource having a configured association with the cell.

Aspect 19. The base station according to any one of aspects 15 to 18, wherein the receiver, in operation, receives the request in a physical uplink control channel (PUCCH), a medium access control (MAC) control element (CE), physical random access channel (PRACH), or a reference signal including the request.

Aspect 20. The base station according to any one of aspects 1 to 4, wherein the receiver, in operation, receives a higher-layer message including the request.

Aspect 21. The base station according to aspect 20, wherein the higher-layer message is a setup message of radio resource control, RRC.

Aspect 22. The base station according to any one of aspects 15 to 21, wherein the common signal is a synchronization signal, a reference signal, a control signal, or system information.

Aspect 23. The base station according to any one of aspects 15 to 22, wherein the request is received when at least one of the following conditions is met:
- an amount of data buffered at a communication apparatus for transmission is greater than a buffer threshold;
- high priority data is available at the communication apparatus for transmission; or
- a data throughput at the communication apparatus is lower than a throughput threshold.

Aspect 24. The base station according to any one of aspects 15 to 23, wherein the request is received when at least one of the following conditions is met:
- all or a number of cells, secondary cells, or secondary cells with the common signal status being ON have a measured channel quality lower than a first quality threshold; or
- a measured channel quality of a primary cell or a synchronization reference cell is lower than the first quality threshold or a second quality threshold different from the first quality threshold.

Aspect 25. The base station according to any one of aspects 15 to 24, wherein whether the request is received is based on a distance between a communication apparatus and a transmission and reception point for the cell, the distance being based on the position information.

Aspect 26. The base station according to any one of aspects 15 to 24, wherein whether the request is received is based on a radio map indicating coverage area information of one or more cells including said cell.

Aspect 27. The base station according to any one of aspects 15 to 25, wherein, when the cell is active or the status of the synchronization signal for the cell is ON, the request is a request for the extension of activity of the cell or of the ON status.

Aspect 28. The base station according to aspect 27, wherein the request includes an indication of a requested duration of the extended activity or ON status.

Aspect 29. A method for a communication apparatus, comprising: determining, based on one or a combination of:
- traffic status,
- a buffer status of the communication apparatus,
- a result of a measurement of channel quality, or
- position information related to a position of the communication apparatus,
whether to transmit a request for:
- activation, extension of activity, or deactivation of a, or
- a common signal for the cell or a transmission occasion in the cell; and transmitting the request.

Aspect 30. A method for a base station, comprising: receiving a request for:
- activation, extension of activity, or deactivation of a cell, or
- a common signal for the cell or a transmission occasion in the cell; and
determining, based on the received request, whether to activate, extend activation, or deactivate the cell or whether to transmit the common signal or activate the transmission occasion.

Aspect 31. An integrated which, in operation, causes a communication apparatus to carry out the steps of aspect 29.

Aspect 32. An integrated which, in operation, causes a base station to carry out the steps of aspect 30.

Aspect 33. A computer-readable medium storing instructions which, when executed by a processor of a communication apparatus, causes the communication apparatus to carry out the steps of aspect 29.

Aspect 34. A computer-readable medium storing instructions which, when executed by a processor of a base station, causes the communication apparatus to carry out the steps of aspect 30.

## Claims

1. A communication apparatus, comprising:
circuitry, which determines, based on one or a combination of:
• traffic status,
• a buffer status of the communication apparatus,
• a result of a measurement of channel quality, or
• position information related to a position of the communication apparatus,
whether to transmit a request for:
• activation, extension of activity, or deactivation of a cell, or
• a common signal for the cell or a transmission occasion in the cell; and
a transmitter, which, in operation, transmits the request.

2. The communication apparatus according to claim 1, wherein the transmitter, in operation, transmits an indication of the buffer status as the request.

3. The communication apparatus according to claim 1 or 2, wherein the request includes an indication of the cell.

4. The communication apparatus according to any one of claims 1 to 3, wherein the transmitter, in operation, transmits the request on a resource having a configured association with the cell.

5. The communication apparatus according to any one of claims 1 to 4, wherein the transmitter, in operation, transmits the request in a physical uplink control channel (PUCCH), a medium access control (MAC) control element (CE), physical random access channel (PRACH), or a reference signal including the request.

6. The communication apparatus according to any one of claims 1 to 4, wherein the transmitter, in operation, transmits a higher-layer message including the request.

7. The communication apparatus according to claim 6, wherein the higher-layer message is a setup message of radio resource control, RRC.

8. The communication apparatus according to any one of claims 1 to 7, wherein the common signal is a synchronization signal, a reference signal, a control signal, or system information.

9. The communication apparatus according to any one of claims 1 to 8, wherein the circuitry, in operation, determines to transmit the request upon determining that at least one of the following conditions is met:
• an amount of data buffered at the communication apparatus for transmission is greater than a buffer threshold;
• high priority data is available at the communication apparatus for transmission; or
• a data throughput at the communication apparatus is lower than a throughput threshold.

10. The communication apparatus according to any one of claims 1 to 9, wherein the circuitry, in operation, determines to transmit the request upon determining that at least one of the following conditions is met:
• all or a number of cells, secondary cells, or secondary cells with the common signal status being ON have a measured channel quality lower than a first quality threshold; or
• a measured channel quality of a primary cell or a synchronization reference cell is lower than the first quality threshold or a second quality threshold different from the first quality threshold.

11. The communication apparatus according to any one of claims 1 to 10, wherein the circuitry, in operation, determines whether to transmit the request based on a distance between the communication apparatus and a transmission and reception point for the cell, the distance being based on the position information.

12. The communication apparatus according to any one of claims 1 to 11, wherein, when the cell is active or the status of the synchronization signal for the cell is ON, the request is a request for the extension of activity of the cell or of the ON status.

13. A base station, comprising:
a receiver which, in operation, receives a request for:
• activation, extension of activity, or deactivation of a cell, or
• a common signal for the cell or a transmission occasion in the cell; and
circuitry, which, in operation, determines, based on the received request, whether to activate, extend activation, or deactivate the cell or whether to transmit the common signal or activate the transmission occasion.

14. A method for a communication apparatus, comprising:
determining, based on one or a combination of:
• traffic status,
• a buffer status of the communication apparatus,
• a result of a measurement of channel quality, or
• position information related to a position of the communication apparatus,
whether to transmit a request for:
• activation, extension of activity, or deactivation of a, or
• a common signal for the cell or a transmission occasion in the cell; and transmitting the request.

15. A method for a base station, comprising:
receiving a request for:
• activation, extension of activity, or deactivation of a cell, or
• a common signal for the cell or a transmission occasion in the cell; and
determining, based on the received request, whether to activate, extend activation, or deactivate the cell or whether to transmit the common signal or activate the transmission occasion.
